# EUROPEAN PATENT APPLICATION

(11) **EP 2 192 776 A1**
(43) Date of publication of application: **02.06.2010**
(21) Application number: 09176956.2
(22) Date of filing: 24.11.2009
(51) Int. Cl.: H04N 7/173

(54) **Display apparatus and display method**

(30) Priority: 01.12.2008 KR 20080120613
(71) Applicant: SAMSUNG ELECTRONICS CO., LTD., Suwon-si, Gyeonggi-do (KR)
(72) Inventor: Hong, Jin-woo, Gyeonggi-do (KR); Park, Si-hong, Gyeonggi-do (KR); Choi, Seung-hyuk, Gyeonggi-do (KR)
(74) Representative: Walaski, Jan Filip

(57) **Abstract**

A display apparatus includes: a first communication unit which conducts communication with an external device connected to the first communication unit; a second communication unit which conducts communication with a contents provider server; a display unit which displays contents being reproduced by the external device and contents related information; and a controller which controls the first communication unit to acquire contents reference information from the external device and controls the second communication unit to retrieve the contents related information using the contents reference information.

## Description

The present invention relates to a display apparatus and a display method, and more particularly, to a display apparatus and a display method, which are capable of providing information related to contents being reproduced in external devices to a user.

If a user attempts to search information related to contents currently being watched on a display apparatus, the user searches the desired information through a personal computer (PC) or other electronic devices.

In addition, when a user is watching contents, which are being reproduced in an external device, on a display apparatus, the user acquires information, advertisement and so on related to a title, which is being reproduced in the external device, through other electronic devices such as a PC, or other media.

In these cases, the user has to boot other electronic device such as the PC and directly search desired information, which is inconvenient.

Accordingly, it is an aspect of the present invention to provide a display apparatus and a display method, which are capable of providing a user with information related to contents being reproduced simply and conveniently.

According to an aspect of the present invention, there is provided a display apparatus including: a first communication unit which conducts communication with an external device connected to the first communication unit; a second communication unit which conducts communication with a contents provider server; a display unit which displays contents being reproduced by the external device and contents related information; an image processing unit which processes and outputs the contents related information; and a controller which controls the first communication unit to acquire contents reference information from the external device and controls the second communication unit to retrieve the contents related information using the contents reference information.

In the display apparatus, the controller may control the second communication unit to retrieve the contents related information using information selected by a user from the contents reference information. In the display apparatus, the controller may control the display unit to display the contents reference information in the form of an On Screen Display. The display apparatus may further include a user input unit which receives from the user the information selected by the user. In the display apparatus, the contents reference information may include at least one of contents attribute information, content basic information, and information related to multimedia data included in the contents. In the display apparatus, the contents attribute information may include at least one of a format, a compression scheme and a size of a contents file. In the display apparatus, the contents basic information may include at least one of a contents identifier, a contents title, a genre, a producer, actors and a reproduction time. In the display apparatus, the information related to multimedia data included in contents may include information about at least one of characters, background location, articles and background music. In the display apparatus, the first communication unit may conduct High Definition Multimedia Interface Consumer Electronic Control communication with the external device. In the display apparatus, the controller may control the display unit to display the content related information in the form of a widget.

According to another aspect of the present invention, there is provided a display method including: displaying contents being reproduced in an external device connected to a display apparatus; acquiring contents reference information by conducting communication with the external device; retrieving contents related information using the acquired contents reference information by conducting communication with a contents provider server; and displaying the retrieved contents related information. In the display method, the contents related information may be retrieved using information selected by a user from the contents reference information. In the display method, the contents reference information may be displayed in the form of an OSD. The display method may further include receiving from the user the information selected by the user. In the display method, the contents reference information may include at least one of contents attribute information, content basic information, and information related to multimedia data included in the contents. In the display method, the contents attribute information may include at least one of a format, a compression scheme, and a size of a contents file. In the display method, the contents basic information may include at least one of a contents identifier, a contents title, a genre, a producer, actors and a reproduction time. In the display method, the information on multimedia data included in contents may include information about at least one of characters, background location, articles and background music. In the display method, HDMI CEC communication with the external device may be conducted. In the display method, the content related information may be displayed in the form of a widget.

According to yet another aspect of the invention, by providing information and advertisement related to contents being reproduced in external devices to a user through interlocking between the apparatus and the devices, it is possible to provide the user with a new application and invent a new business model for a service provider. Further, by providing information and advertisement based on user selection, information and advertisement can be more effectively provided.

The above and/or other aspects of the present invention will become apparent and more readily appreciated from the following description of the exemplary embodiments, taken in conjunction with the accompanying drawings, in which:
FIG. 1 is a view showing a configuration of a network including a display apparatus according to an exemplary embodiment of the present invention.
FIG. 2 is a view showing a configuration of a display apparatus according to an exemplary embodiment of the present invention.
FIGs. 3A to 3C are exemplary views of contents related information displayed on a display apparatus according to contents reference information, according to an exemplary embodiment of the present invention.
FIG. 4 is a flow diagram showing a display method according to an exemplary embodiment of the present invention.
FIG. 5 is a flow diagram showing a display method according to another exemplary embodiment of the present invention.

Reference will now be made in detail to the exemplary embodiments of the present invention, examples of which are illustrated in the accompanying drawings, so that those skilled in the art can easily practice the present invention. The present invention is not limited to exemplary embodiments disclosed herein but may be implemented in different forms. In the following exemplary embodiments, for the purpose of clarity, the same components are denoted by the same reference numerals throughout the drawings, and explanation thereof will be representatively given in a first exemplary embodiment but will be omitted in other exemplary embodiments.

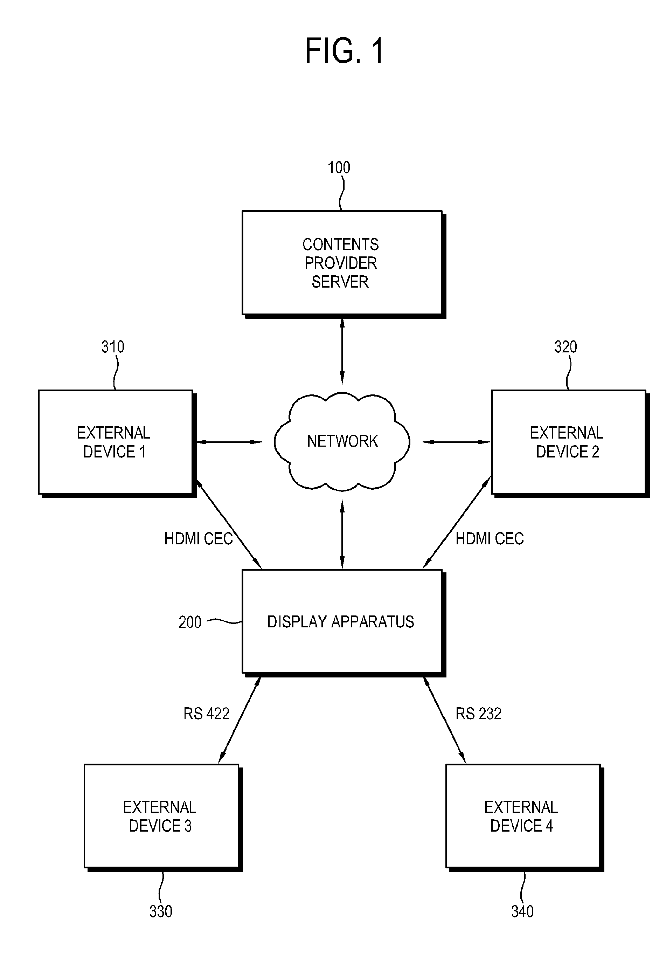

FIG. 1 is a view showing a configuration of a network including a display apparatus according to an exemplary embodiment of the present invention.

A display apparatus 200 according to an exemplary embodiment of the present invention may be connected to a plurality of external devices 310, 320, 330 and 340 by wire or wireless. In this case, the display apparatus 200 and the plurality of external devices 310, 320, 330 and 340 may conduct communication for control therebetween. Specifically, HDMI CEC communication, RS 422 communication, RS 485 communication or the like may be conducted depending on the kind of the display apparatus 200. Referring to FIG. 1, the display apparatus 200 conducts HDMI CEC communication with external device 1 310 and external device 2 320, RS 422 communication with external device 3 330, and RS 232 communication with external device 4 340. In case of HDMI CEC communication, the display apparatus 200 may be connected to external device 1 310 and external device 2 320 according to HDMI CEC standards.

In the meantime, the display apparatus 200 may conduct data communication with a contents provider server 100. In this case, the display apparatus 200 may conduct data communication with the contents provider server 100 according to an Internet Protocol (IP) via network.

The plurality of external devices 310, 320, 330 and 340 may be any of a Digital Versatile Disc (DVD) player, a DVD recorder, a Blu-ray Disc (BD), a set top box, a digital television (TV), a desktop computer and the like.

The plurality of external devices 310, 320, 330 and 340 may reproduce contents stored in a storage medium or contents received from an external source. If the plurality of external devices 310, 320, 330 and 340 includes a display panel implemented as a monitor or the like, these devices themselves may output reproduced contents. On the contrary, if the plurality of external devices 310, 320, 330 and 340 does not include a display panel, they may output reproduced contents to the display apparatus 200 connected thereto by wire or wirelessly.

In the meantime, the plurality of external devices 310, 320, 330 and 340 may also conduct data communication with the contents provider server 100. Such data communication may be conducted according to an Internet Protocol (IP) via the network.

The contents provider server 100 may conduct communication, i.e., exchange data with the display apparatus 200 or the plurality of external devices 310 and 320. Specifically, the contents provider server 100 may be an ISP (Internet Service Provider) or the like.

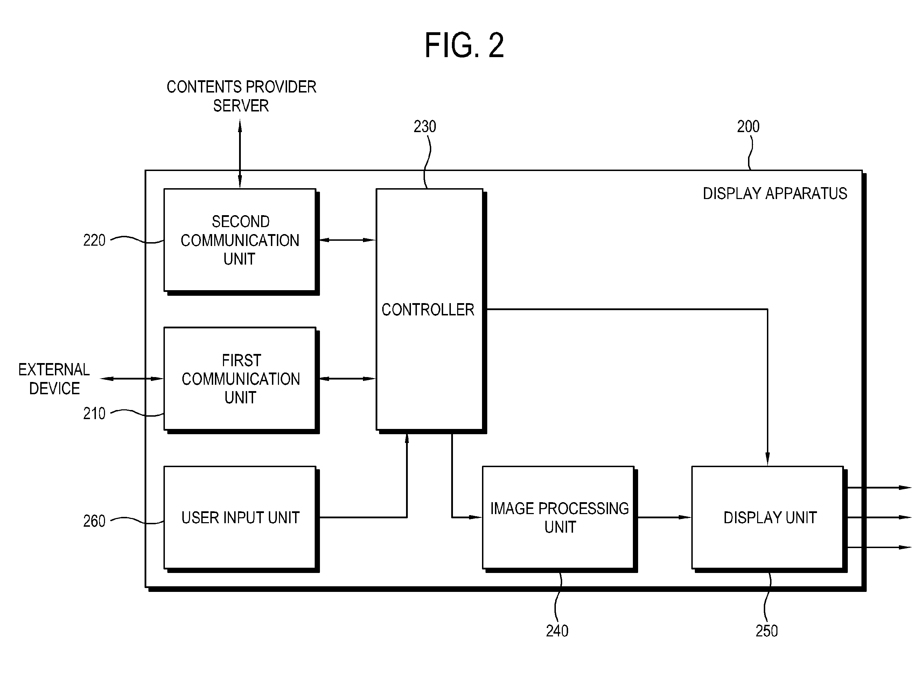

FIG. 2 is a view showing a configuration of a display apparatus according to an exemplary embodiment of the present invention.

The display apparatus 200 according to an exemplary embodiment of the present invention may be a digital TV, a desktop computer, a laptop computer, or further any other electronic device as long as it can output contents reproduced in the external devices 310, 320, 330 and 340 connected thereto.

As shown in FIG. 2, the display apparatus 200 may include a first communication unit 210, a second communication unit 220, a controller 230, an image processing unit 240, a display unit 250 and a user input unit 260.

The first communication unit 210 may conduct communication with the external devices 310, 320, 330 and 340 for control therebetween. For example, the first communication unit 210 may conduct HDMI CEC communication with the external devices 310 and 320.

The second communication unit 220 may conduct data communication with the contents provider server 100. In this case, according to a first embodiment, the second communication unit 220 may retrieve contents related information by using contents reference information under control of the controller 230. According to a second embodiment, the second communication unit 220 may retrieve contents related information by using information selected by a user of the contents reference information under control of the controller 230.

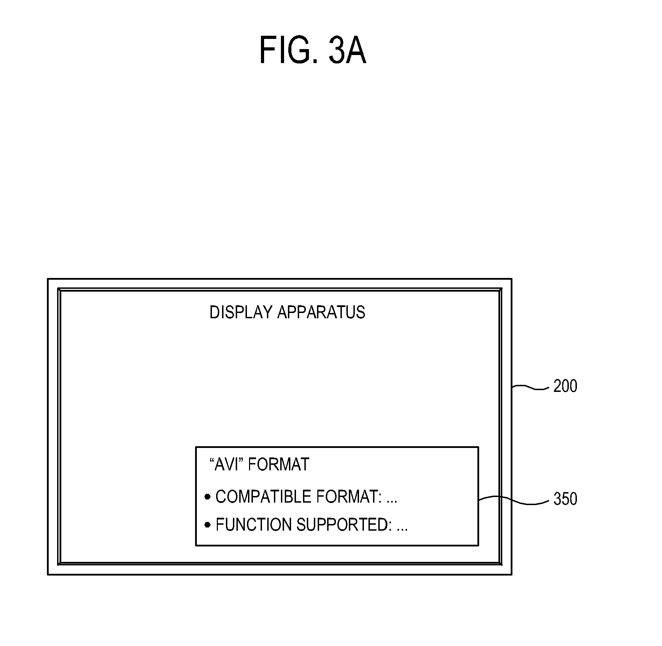

The contents reference information refers to all additional contents data. In more detail, the contents reference information may include at least one of contents attribute information, content basic information, and information related to multimedia data included in the contents. Content related information refers to information related to the contents reference information. The contents reference information and the contents related information will be described in more detail with reference to FIGs. 3A to 3C.

The controller 230 may control the first communication unit 210 to acquire the contents reference information from the external devices 310, 320, 330 and 340 and control the second communication unit 220 to retrieve the contents related information using the contents reference information.

Specifically, according to the first exemplary embodiment, the controller 230 may control the second communication unit 220 to retrieve the contents related information using the contents reference information. In addition, according to the second exemplary embodiment, the controller 230 may control the second communication unit 220 to retrieve the contents related information using information selected by a user of the contents reference information. In this case, the controller 230 may control the display unit 250 to output the contents reference information in the form of an OSD.

In addition, the controller 230 may control the display unit 250 to output the contents related information in the form of a widget.

The image processing unit 240 may process and output the contents related information. Specifically, the image processing unit 240 may process the contents related information retrieved through the contents provider server 100 and output it to the display unit 250.

The display unit 250 may display contents reproduced by the external devices 310, 320, 330 and 340 and the contents related information. In this case, the external devices 310, 320, 330 and 340 process and reproduce the contents and output them to the display unit 200.

In addition, the display unit 250 may display the contents related information in the form of a widget under control of the controller 230.

In the meantime, according to the second exemplary embodiment, when the contents related information is retrieved using the information selected by the user from the contents reference information, the display unit 250 may display the contents reference information in the form of an OSD under control of the controller 230.

To this end, the display unit 250 may include a liquid crystal display (LCD), an organic light emitting display (OLED), a plasma display panel (PDP) or the like.

For one exemplary embodiment, the display apparatus 200 may further include the user input unit 260. The user input unit 260 may receive from the user information selected by a user from the contents reference information. To this end, the user input unit 260 may include a user interface such as a remote controller or the like.

Hereinafter, a display method according an exemplary embodiment of the present invention will be described in detail.

FIGs. 3A to 3C are views showing examples of contents related information displayed on a display apparatus according to contents reference information.

The content reference information may include at least one of contents attribute information, content basic information, and information related to multimedia data included in the contents. In this case, the contents reference information may be exchanged through control communication between the display apparatus 200 and external devices.

The contents related information is information related to the contents reference information. The contents related information may include information tagged to the contents, a Uniform Resource Locator (URL) tagged to the contents, and advertisements.

For example, information indicating that a format of contents being currently reproduced is an Audio Video Interface (AVI) format is contents reference information, while information on a format compatible with the avi format is contents related information.

If an external device is currently reproducing and outputting contents to the display apparatus 200, the display apparatus 200 may acquire the contents reference information through control communication with the external device. In this case, the display apparatus 200 may create a retrieval formula using the acquired contents reference information and collect information which matches the retrieval formula through communication with the contents provider server 100.

FIG. 3A shows a case where content related information is displayed for the contents reference information that is the contents attribute information according to an exemplary embodiment.

The contents attribute information may include at least one of format, compression scheme and size of a contents file. Specifically, the contents file format may include an AVI format, an Advanced Systems Format (ASF) format or the like for a movie file and include an MP3 format, a Windows Media Audio (WMA) format, a Waveform Audio (WAV) format or the like for an audio file. The compression scheme may include a Moving Picture Experts Group (MPEG) scheme, a QuickTime (MOV) scheme, a DivX scheme or the like. For example, if a format of a contents file being currently reproduced in an external device is an AVI format, the display apparatus 200 may collect and display contents related information, that is, information related to the AVI format. Referring to FIG. 3A, contents related information 350 displayed by the display apparatus 200 is information on a format compatible with the AVI format and a function supported by the AVI format.

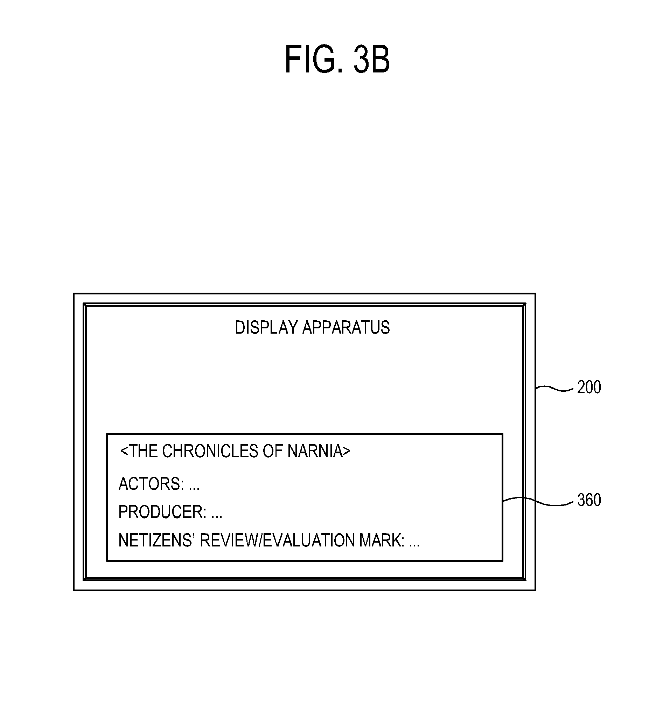

FIG. 3B shows a case where content related information is displayed for the contents reference information that is the contents basic information according to an exemplary embodiment.

The contents basic information may include at least one of contents identifier (ID), contents title, genre, producer, actors and reproduction time. Specifically, the contents basic information may be information about details of contents. In this case, the display apparatus 200 may collect detailed information on the contents title, genre, producer, actors and the like. For example, if contents, "The Chronicles Of Narnia," is being currently reproduced by an external device, the display apparatus 200 may collect and display contents related information, that is, information related to "The Chronicles Of Narnia." Referring to FIG. 3B, contents related information 360 displayed by the display apparatus 200 is information about actors, producer, and netizens' review and evaluation mark.

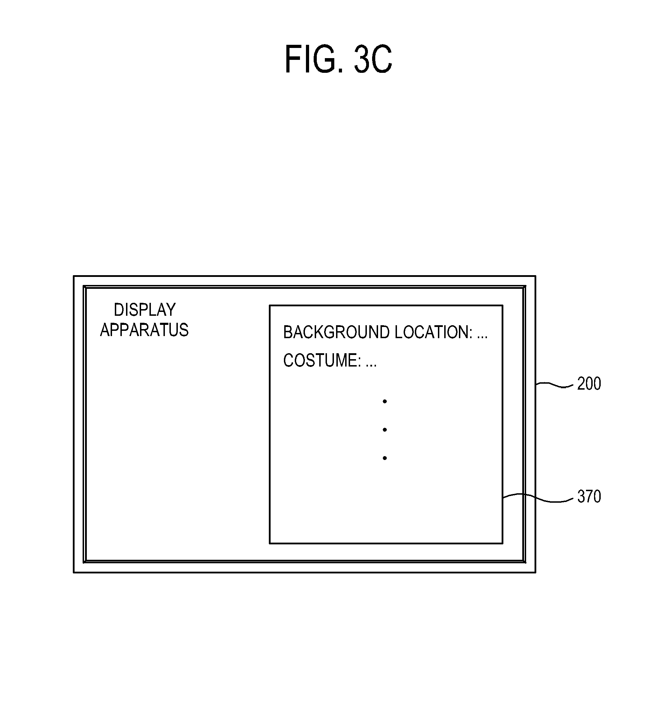

FIG. 3C shows a case where content related information is displayed for the contents reference information that is the information about multimedia data included in contents according to an exemplary embodiment.

The information about multimedia data included in contents may include at least one of characters, background location, articles and background music. In this case, the display apparatus 200 may collect detailed information about background location, articles and background music being currently displayed in a screen. For example, if contents, "The Chronicles Of Narnia," is being currently reproduced by an external device, the display apparatus 200 may collect and display contents related information, that is, information about background location of a current screen and articles carried by a hero. Referring to FIG. 3C, contents related information 370 displayed by the display apparatus 200 is detailed information about background location of a screen being currently displayed and costume of characters.

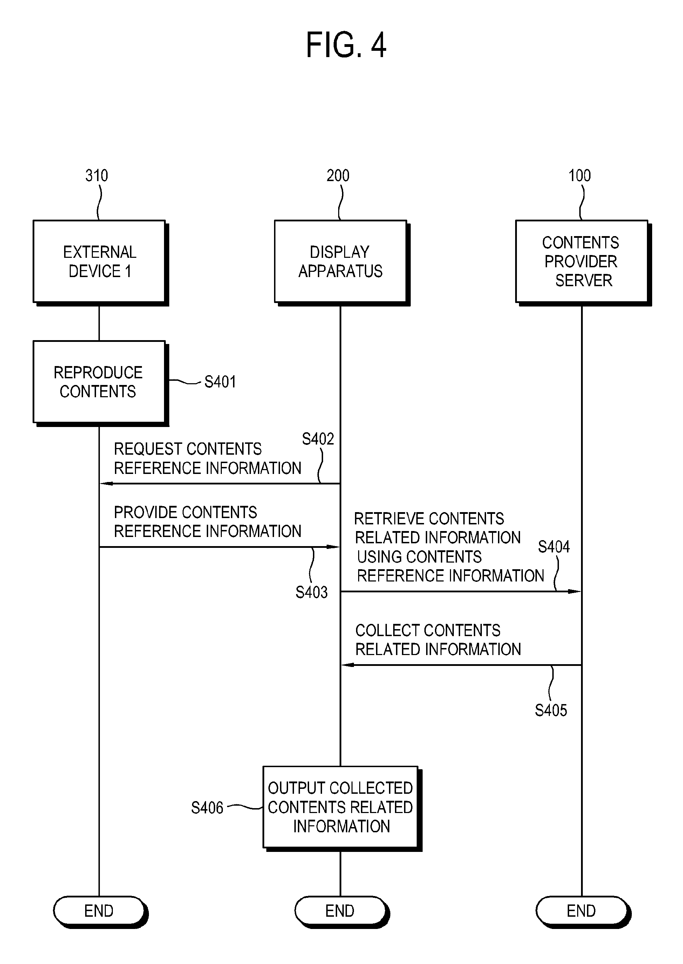

FIG. 4 is a flow diagram showing a display method according to a first exemplary embodiment of the present invention.

According to a first exemplary embodiment of the present invention, the display apparatus 200 may retrieve the contents related information using the contents reference information.

The external device 1 310 reproduces contents stored in a storage medium or contents received from an external source (S401). In this case, the external device 1 310 may output the reproduced contents through the display apparatus 200 connected thereto by a wire or wireless communication link.

The display apparatus 200 requests the external device 1 310 to provide the contents reference information (S402). In response to this request, the external device 1 310 provides the contents reference information to the display apparatus 200 (S403). In this case, the contents reference information may be provided through control communication between the display apparatus 200 and the external device. For example, the contents reference information may be provided through HDMI CEC communication.

The display apparatus 200 retrieves the content related information using the acquired contents reference information (S404) and then collects the content related information from this retrieval operation (S405). Specifically, the display apparatus 200 may create a retrieval formula using the acquired content reference information and retrieve and collect information which matches the retrieval formula through communication with the contents provider server 100.

In this case, the display apparatus 200 outputs the collected contents related information (S406). For example, the display apparatus 200 may output the contents related information in the form of a widget.

In the related art, in order to retrieve detailed information about contents being reproduced, related information, advertisements and the like, a user has to retrieve desired information using other electronic devices such as PCs. However, according to an exemplary embodiment of the present invention, the display apparatus 200 can retrieve, collect and display information related to contents being reproduced without separate operation of a user. Further, in an exemplary embodiment of the present invention, information related to contents being reproduced in external devices can also be retrieved and collected.

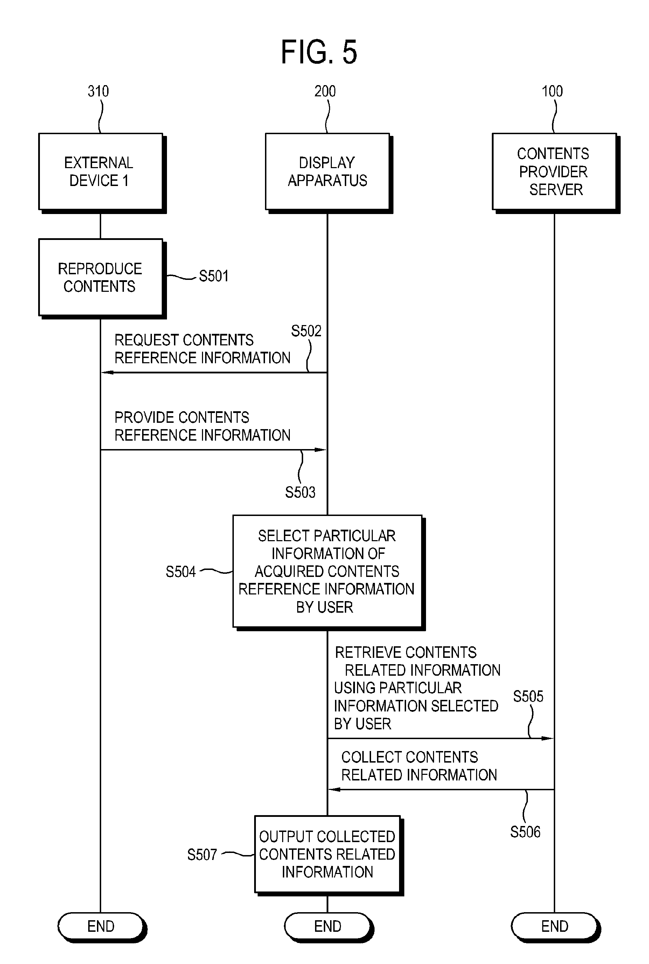

FIG. 5 is a flow diagram showing a display method according to a second exemplary embodiment of the present invention.

According to a second exemplary embodiment of the present invention, the display apparatus 200 may retrieve the contents related information using information selected by a user from the contents reference information. Hereinafter, explanation overlapping with that in the first exemplary embodiment will be omitted.

The external device 1 310 may reproduce contents (S501), and output the reproduced contents through the display apparatus 200 connected thereto by a wire or wireless communication link.

The display apparatus 200 requests the external device 1 310 to provide the contents reference information (S502). In response to this request, the external device 1 310 provides the contents reference information to the display apparatus 200 (S503). In this case, the display apparatus 200 may output the acquired contents reference information in the form of an OSD. Accordingly, the user may select particular information desired to be retrieved in more detail of the acquired contents reference information (S504).

The display apparatus 200 retrieves the content related information using the particular information selected by the user (S505) and then collects the content related information from this retrieval (S506). Specifically, the display apparatus 200 may create a retrieval formula using the particular information selected by the user and retrieve and collect information which matches the retrieval formula through communication with the contents provider server 100.

In this case, the display apparatus 200 outputs the collected contents related information (S507). Herewith, the display method according to the second exemplary embodiment of the present invention is ended.

Although a few exemplary embodiments of the present invention have been shown and described, it will be appreciated by those skilled in the art that changes may be made in these embodiments without departing from the principles of the invention, the scope of which is defined in the appended claims.

## Claims

1. A display apparatus comprising:
a first communication unit which conducts communication with an external device connected to the display apparatus;
a second communication unit which conducts communication with a contents provider server;
a display unit which displays contents being reproduced by the external device and contents related information; and
a controller which controls the first communication unit to acquire contents reference information from the external device and controls the second communication unit to retrieve the contents related information using the contents reference information.

2. The display apparatus according to claim 1, wherein the controller controls the second communication unit to retrieve the contents related information using information selected by a user from the contents reference information.

3. The display apparatus according to claim 1 or 2, wherein the controller controls the display unit to display the contents reference information in a form of an On Screen Display.

4. The display apparatus according to claim 1, 2 or 3, further comprising a user input unit which receives from the user the information selected by the user.

5. The display apparatus according to any one of the preceding claims, wherein the contents reference information comprises at least one of contents attribute information, content basic information, and information related to multimedia data included in the contents.

6. The display apparatus according to claim 5, wherein the contents attribute information comprises at least one of a format, a compression scheme and a size of a contents file.

7. The display apparatus according to claim 5 or 6, wherein the contents basic information comprises at least one of a contents identifier, a contents title, a genre, a producer, actors and a reproduction time.

8. The display apparatus according to claim 5, 6 or 7, wherein the information on multimedia data included in contents comprises information about at least one of characters, background location, articles and background music.

9. The display apparatus according to any one of the preceding claims, wherein the first communication unit conducts High Definition Multimedia Interface Consumer Electronic Control communication with the external device.

10. The display apparatus according to any one of the preceding claims, wherein the controller controls the display unit to display the content related information in a form of a widget.

11. A display method comprising:
displaying contents being reproduced in an external device connected to a display apparatus;
acquiring contents reference information by conducting communication with the external device;
retrieving contents related information using the acquired contents reference information by conducting communication with a contents provider server; and
displaying the retrieved contents related information.

12. The display method according to claim 11, wherein the contents related information is retrieved using information selected by a user from the acquired contents reference information.

13. The display method according to claim 11 or 12, wherein the contents reference information is displayed in a form of an On Screen Display.

14. The display method according to claim 12, further comprising receiving from the user the information selected by the user.

15. The display method according to any one of claims 11 to 14, wherein High Definition Multimedia Interface Consumer Electronic Control communication with the external device is conducted.
